# EUROPÄISCHE PATENTSCHRIFT

(11) **EP 0 842 550 B1**
(45) Veröffentlichungstag und Bekanntmachung des Hinweises auf die Patenterteilung: **06.09.2000**
(21) Anmeldenummer: 96919799.5
(22) Anmeldetag: 23.05.1996
(51) Int. Cl.: H01M 10/40, H01M 10/44

(54) **LITHIUM-IONEN-ZELLE**
LITHIUM ION CELL
PILE AUX IONS LITHIUM

(30) Priorität: 31.07.1995 DE 19528049
(43) Veröffentlichungstag der Anmeldung: 20.05.1998
(73) Patentinhaber: NBT GmbH, 30419 Hannover (DE)
(72) Erfinder: HERR, Rudolf, D-65779 Kelkheim (DE)
(74) Vertreter: Kaiser, Dieter Ralf, Dipl.-Ing.
(86) Internationale Anmeldenummer: EP9602214
(87) Internationale Veröffentlichungsnummer: WO9705667

(56) Entgegenhaltungen:
- EP-A- 0 328 131
- US-E- R E33 306

## Beschreibung

Die Erfindung betrifft eine Lithium-lonen-Zelle, bestehend aus einer eine lithiumhaltige Chalkogenverbindung eines Übergangsmetalls enthaltenden positiven Elektrode, einem nichtwäßrigem Elektrolyten und einer separatorgetrennten kohlenstoffhaltigen negativen Elektrode.

Aus dem Dokument J.M. Tarascon und D. Guyomard, Electrochimica Acta, Band 38, Nr. 9, Seiten 1221 - 1231 (1993) ist es bekannt, daß Lithium-lonen-Zellen der vorgenannten Art nach dem ersten Lade-/Entladezyklus einen irreversiblen Verlust von Lithium-lonen erleiden, der zu einem 25 - 50%igen Kapazitätsschwund führt. Die Lithium-lonen werden dabei vom kohlenstoffhaltigen aktiven Material der negativen Elektrode gebunden und stehen für den Ladungstransport nicht mehr zur Verfügung. Um diesen Kapazitätsverlust auszugleichen, wurde bereits vorgeschlagen, ein Lithium-lonen-Reservoir durch die Zugabe von n-Butyllithium oder Lithiumiodid zur negativen Elektrode anzulegen. Auch Verluste an Lithium-lonen, die durch Reaktion mit dem Elektrolyten, Verunreinigungen oder Veränderungen der Chalkogenverbindungen verloren gehen, sollen dadurch ausgeglichen werden.

In der Druckschrift EP-A-201038 wird vorgeschlagen, die positive und/oder negative Elektrode mit Lithium-lonen zu dotieren. Vorzugsweise soll danach die Entladekapazität der positiven Elektrode 1,1 bis 3mal größer als die der negativen Elektrode bemessen werden. Weiterhin ist aus dem Dokument US-PS 5,162,176 bekannt, die kohlenstoffhaltige negative Elektrode zum Ausgleich des irreversiblen Lithiumverlustes mit 1 bis 6 Gew.-% der Elektrodenmasse vorzulithiieren. Die bekannten Lithium-lonen-Zellen sind durch die Lithiierung der aktiven Materialien der Elektroden empfindlich gegenüber Zersetzungsreaktionen bei der Handhabung an Luft. Zu ihrer Herstellung müssen aufwendige und kostspielige Trockenraumverfahren eingesetzt werden. Auch die aus dem Dokument US-Re. 33,306 bekannte Zelle weist den Nachteil auf, daß das in unmittelbaren Kontakt zum kohlenstoffhaltigen Anodenmaterial stehende Lithiummetall zu einer sehr reaktionsfreudigen Verbindung führt, die einen erhöhten Fertigungsaufwand bedingt.

Die Erfindung hat sich die Aufgabe gestellt, eine Lithium-lonen-Zelle anzugeben, die geringe Kapazitätsverluste durch irreversibel gebundene Lithium-lonen aufweisen und dabei trotzdem einfach hergestellt werden können.

Erfindungsgemäß wird die Aufgabe dadurch gelöst, daß die Zelle Lithiummetall oder eine Lithiumlegierung in einer von den Elektroden räumlich getrennten Form enthält, wobei das Lithiummetall oder die Lithiumlegierung eine Verbindung zum Stromableiter einer Elektrode und über den Elektrolyten eine ionische Verbindung zu den Elektroden besitzt. Das mit den Elektroden durch den Elektrolyt verbundene Lithiummetall oder die Lithiumlegierung stellen ein Reservoir für Lithium-lonen dar, die durch irreversible Reaktionen verloren gehen und damit zu einem Kapazitätsverlust der Zelle führen würden. Der Einsatz von metallischen Lithium oder einer Lithiumlegierung wie LiAl sind fertigungstechnisch leicht zu handhaben. Auch im Hinblick auf die erst im Laufe der Lebensdauer einer Lithium-lonen-Zelle durch Reaktion mit dem Elektrolyten eintretende Veränderungen können durch das Lithium-Reservoir ausgeglichen werden. Das gleiche trifft auch für Veränderungen der Lithium-lonenaufnahme- bzw. abgabefähigkeit der aktiven Elektrodenmaterialien zu. Vorzugsweise wird die Menge an Lithiummetall oder des in der Lithiumlegierung verfügbaren Lithiums so bemessen, daß sie 20 bis 50% des in der Zelle theoretisch zyklisierbaren Lithiums entspricht. Durch die vorgeschlagene Bemessung der Lithium- bzw. Lithiumlegierungsmenge wird eine Kapazitätsminderung der Lithium-lonen-Zelle, ausgedrückt in mAh/g Gesamtmasse, gering gehalten. Das Lithium-Reservoir wird vorzugsweise in der Lithium-lonen-Zelle in der Weise angelegt, daß das elementare Lithiummetall oder eine Lithiumlegierung als Scheibe oder Folie in der Zelle enthalten ist. In mehrere Elektroden enthaltenden prismatischen Zellen oder Wickelzellen befindet sich die Lithiumscheibe oder -folie vorzugsweise auf dem Becherboden. Die erfindungsgemäße Anordnung der Lithiumscheibe oder -folie gewährleistet eine gleichmäßigere Nachlieferung von Lithium-lonen. Vorzugsweise werden als aktives Material der Kathode die lihiumhaltigen Chalkogenverbindungen LiₓMn_{y}O_{z}, LiₓCoO₂ oder LiₓNiO₂ und als aktives Material der Anode ein Kohlenstoffmaterial mit einem Kohlenstoffgehalt > 99,5 % und Schichtenstruktur eingesetzt, das eine BET-Oberfläche zwischen 0,5 und 20 m²/g und einem Schichtabstand d₀₀₂ zwischen 0,335 und 0,339 nm besitzt.

Die erfindungsgemäßen Lithium-lonen-Zellen werden in der Weise hergestellt, daß die ungeladenen Elektroden und Lithiummetall oder eine Lithiumlegierung in die Zelle eingebracht, anschließend Elektrolyt eingefüllt und die Zelle verschlossen wird.

Vor ihrer ersten Ladung werden die Zellen vorzugsweise bis zu 10 Tagen gelagert. Der Potentialunterschied zwischen den Lithiummetall bzw. der Lithiumlegierung und dem kohlenstoffhaltigen, negativen Elektrodenmaterial und/ oder dem lithiumhaltigen Chalkogen der negativen Elektrode bewirkt dabei schon ein Einwandern von Lithium-lonen an die Stellen, an denen Lithium-lonen irreversibel gebunden werden bzw. das Abreagieren von fertigungstechnisch eingeschleppten Wasserspuren. Vorzugsweise werden für den Zeitraum der Lagerung die Elektroden kurzgeschlossen, so daß beide Elektroden mit dem Lithiummetall oder der Lithiumlegierung elektrisch verbunden sind.

Der bei den bekannten Zellen nach der ersten Ladung auftretende Kapazitätsverlust von bis zu 50% der Ausgangsbeladung ist bei den erfindungsgemäßen Zellen auf ca. 5 bis 10% vermindert.

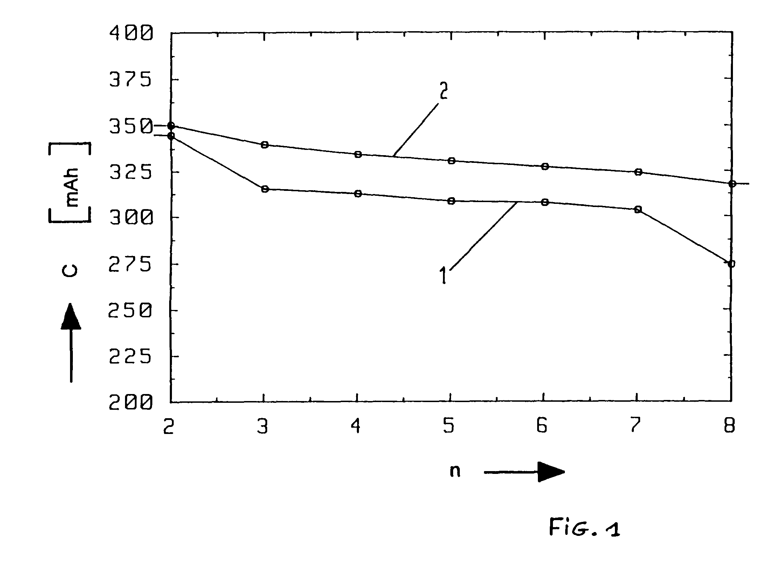

Eine erfindungsgemäße Lithium-lonen-Zelle wird am Beispiel einer Wickelzelle und der Figur 1 näher erläutert.

Figur 1 zeigt dabei die Kapazitäten [C] einer Vergleichszelle (1) und einer erfindungsgemäßen Lithium-lonen-Zelle (2) in Abhängigkeit von der Zyklenzahl [n].

### Vergleichsbeispiel:

3,25 g LiMn₂O₄ werden mit 15 mg Ruß und 10 mg Polyacrylatbinder in Wasser dispergiert. Die Dispersion wird auf eine 20 µm Dicke Aluminiumfolie aufgebracht, getrocknet und zu einer positiven Elektrode mit den Maßen 34 x 3,85 x 0,0175 cm verwalzt.

950 mg Graphitpulver werden zusammen mit 50 mg Binder in Wasser dispergiert und auf eine 15 um Dicke Kupferfolie aufgebracht, getrocknet und zu einer negativen Elektrode mit den Maßen 34 x 3,85 x 0,075 cm verwalzt.

Beide Elektroden werden nun mit der Masseseite zueinander, getrennt durch eine mikroporöse Polypropylen-Membran, aufeinander gelegt und zu einem Wickel mit einem Durchmesser von 13 und einer Länge von 42 mm gerollt.

Der Wickel wird in einen Zellbecher (Größe AA) gesteckt, die negative Elektrode mit dem Becher und die positive Elektrode mit der Poldurchführung am Kopf der Zelle verbunden. Anschließend wird die Zelle mit 0,5 g Elektrolyt bestehend aus einer 50:50 volumenprozentigen Mischung von Ethylencarbonat und Diethylcarbonat befüllt und verschlossen. Mit einem Be- bzw. Entladestrom von 75 mA lassen sich im Voltbereich zwischen 3,3 und 4,3 V ca. 250 mA zyklisieren.

### Beispiel 1:

Analog dem Vergleichsbeispiel wird eine erfindungsgemäße Lithium-lonen-Zelle erstellt mit dem Unterschied, daß im Boden des Zellbechers eine Lithiumscheibe mit einem Durchmesser von 12 und einer Dicke von 0,5 mm eingelegt wird. Die Lithiumscheibe ist über den Zellbecher mit der negativen Elektrode kurzgeschlossen. Die Zelle wurde vor der Zyklisierung eine Woche gelagert.

Figur 1 zeigt den Vergleich der zyklisierbaren Kapazität [C] zwischen vergleichs- (1) und erfindungsgemäßer Lithium-lonen-Zelle (2). Die erfindungsgemäße Lithium-lonen-Zelle (2) weist ca. 20% mehr zyklisierbare Kapazität als die Vergleichszelle (1) auf.

## Patentansprüche

1. Lithium-lonen-Zelle, bestehend aus einer eine lithiumhaltige Chalkogenverbindung eines Übergangsmetalls enthaltenden positiven Elektrode, einem nichtwäßrigen Elektrolyten und einer separatorgetrennten kohlenstoffhaltigen negativen Elektrode, dadurch gekennzeichnet, daß die Zelle Lithiummetall oder eine Lithiumlegierung in einer von den Elektroden räumlich getrennten Form enthält, wobei das Lithiummetall oder die Lithiumlegierung eine Verbindung zum Stromableiter einer Elektrode und über den Elektrolyten eine ionische Verbindung zu den Elektroden besitzt.

2. Lithium-lonen-Zelle nach Anspruch 1, dadurch gekennzeichnet, daß die Menge an Lithiummetall oder in einer Lithiumlegierung enthaltenem Lithium 20 bis 50% des in der Zelle theoretisch zyklisierbaren Lithiums entspricht.

3. Lithium-lonen-Zelle nach Anspruch 1 und/oder 2, dadurch gekennzeichnet, daß das Lithiummetall oder die Lithiumlegierung als Scheibe oder Folie in der Zelle enthalten ist.

4. Lithium-lonen-Zelle nach einem oder mehreren der Ansprüche 1 bis 3, dadurch gekennzeichnet, daß eine Lithiumscheibe oder -folie sich auf dem Becherboden einer mehrere Elektroden enthaltenden prismatischen Zelle oder einer Wickelzelle befindet.

5. Lithium-lonen-Zelle nach einem oder mehreren der Ansprüche 1 bis 4, dadurch gekennzeichnet, daß als lithiumhaltige Chalkogenverbindung LiₓMn_{y}O_{z}, LiₓCoO₂ oder LiₓNiO₂ eingesetzt wird.

6. Lithium-lonen-Zelle nach einem oder mehreren der Ansprüche 1 bis 4, dadurch gekennzeichnet, daß als kohlenstoffhaltiges aktives Material der negativen Elektrode ein Kohlenstoffmaterial mit einem Kohlenstoffgehalt > 99,5 % und Schichtenstruktur eingesetzt wird, das eine BET-Oberfläche zwischen 0,5 und 20 m²/g und einem Schichtabstand d₀₀₂ zwischen 0,335 und 0,339 nm besitzt.

7. Verfahren zur Herstellung einer Lithium-lonen-Zelle nach einem oder mehreren der Ansprüche 1 bis 6, dadurch gekennzeichnet, daß die ungeladenen Elektroden und Lithiummetall oder eine Lithiumlegierung in die Zelle eingebracht, anschließend Elektrolyt eingefüllt und die Zelle verschlossen wird.

8. Verfahren nach Anspruch 7, dadurch gekennzeichnet, daß die Zellen vor ihrer ersten Ladung bis zu 10 Tagen gelagert werden.

9. Verfahren nach Anspruch 7 oder 8, dadurch gekennzeichnet, daß für den Zeitraum der Lagerung die Elektroden kurzgeschlossen werden, so daß beide Elektroden mit dem Lithiummetall oder der Lithiumlegierung elektrisch verbunden sind.

## Claims

1. Lithium ion cell, comprising a positive electrode which contains a chalkogen compound, containing lithium, of a transition metal, a non-aqueous electrolyte and a negative electrode which is separator-isolated and contains carbon, characterized in that the cell contains lithium metal or a lithium alloy in a form physically separated from the electrodes, the lithium metal or the lithium alloy having a connection for the main lead of an electrode and, via the electrolyte, an ionic connection for the electrodes.

2. Lithium ion cell according to Claim 1, characterized in that the amount of lithium metal or lithium contained in a lithium alloy corresponds to 20 to 50% of the lithium which can theoretically be cycled in the cell.

3. Lithium ion cell according to Claim 1 and/or 2, characterized in that the lithium metal or the lithium alloy is contained in the cell as a disk or film.

4. Lithium ion cell according to one or more of Claims 1 to 3, characterized in that a lithium disk or film is located on the container base of a prismatic cell containing a plurality of electrodes or of a wound cell.

5. Lithium ion cell according to one or more of Claims 1 to 4, characterized in that LiₓMn_{y}O_{z}, LiₓCoO₂ or LiₓNiO₂ is used as the chalkogen compound containing lithium.

6. Lithium ion cell according to one or more of Claims 1 to 4, characterized in that a carbon material having a carbon content of > 99.5% and a layered structure is used as the active material (containing carbon) for the negative electrode, which carbon material has a BET specific surface area of between 0.5 and 20 m²/g, and a layer separation doo2 of between 0.335 and 0.339 nm.

7. Method for manufacturing a lithium ion cell according to one or more of Claims 1 to 6, characterized in that the uncharged electrodes and lithium metal or a lithium alloy are fitted into the cell, and the cell is then filled with electrolyte and sealed.

8. Method according to Claim 7, characterized in that the cells are stored for up to 10 days before being charged for the first time.

9. Method according to Claim 7 or 8, characterized in that the electrodes are short-circuited during the storage time period, so that both electrodes are electrically connected to the lithium metal or to the lithium alloy.

## Revendications

1. Pile aux ions lithium composée d'une liaison chalcogène contenant du lithium, d'une électrode positive contenant un métal transitoire, d'un électrolyte non aqueux et d'une électrode négative carbonée séparée par séparateur,
caractérisée en ce que
la pile contient du lithium métal ou un alliage de lithium sous une forme séparée matériellement des électrodes, le lithium ou l'alliage de lithium possédant une liaison avec le collecteur de courant d'une électrode et une liaison ionique avec les électrodes par l'intermédiaire de l'électrolyte.

2. Pile aux ions lithium selon la revendication 1,
caractérisée en ce que
la quantité de lithium contenue dans le lithium métal ou l'alliage de lithium correspond à 20 à 50 % du lithium théoriquement cyclable de la pile.

3. Pile aux ions lithium selon la revendication 1 ou 2,
caractérisée en ce que
le lithium métal ou l'alliage de lithium est contenu dans la pile sous forme d'un disque ou d'un feuillard.

4. Pile aux ions lithium selon une ou plusieurs des revendications 1 à 3,
caractérisée en ce que
le disque ou le feuillard de lithium se trouve placé sur le fond du bac d'une pile prismatique ou spiralée comprenant plusieurs électrodes.

5. Pile aux ions lithium selon une ou plusieurs des revendications 1 à 4,
caractérisée en ce que,
comme liaison chalcogène à teneur en lithium, on introduit LiₓMn_{y}O_{z}, LiₓCoO_{z} ou LiₓNiO₂.

6. Pile aux ions lithium selon une ou plusieurs des revendications 1 à 4,
caractérisée en ce qu'
on introduit comme élément actif carboné de l'électrode négative, un élément carboné de teneur en carbone > 99,5 % et une structure en couches, ayant une face supérieure BET entre 0,5 et 20 m²/g et un espace entre couches compris entre 0,335 et 0,339 nm.

7. Procédé pour l'obtention de piles aux ions lithium suivant l'une ou plusieurs des revendications 1 à 6,
caractérisée en ce que
l'on introduit dans la pile les électrodes non chargées ainsi que le lithium métal ou l'alliage de lithium, puis on la remplit d'électrolyte, et on la referme.

8. Procédé suivant la revendications 7,
caractérisée en ce que
les piles doivent être entreposées pendant 10 jours avant leur première charge.

9. Procédé suivant la revendication 7 ou 8,
caractérisée en ce que
pendant l'entreposage, les électrodes doivent être court-circuitées en sorte que les deux électrodes sont reliées électriquement avec le lithium métal ou l'alliage de lithium.
